# EUROPÄISCHE PATENTSCHRIFT

(11) **EP 2 978 590 B1**
(45) Veröffentlichungstag und Bekanntmachung des Hinweises auf die Patenterteilung: **05.09.2018**
(21) Anmeldenummer: 14716754.8
(22) Anmeldetag: 25.03.2014
(51) Int. Cl.: B29C 67/00, B22F 3/105

(54) **VERFAHREN ZUR HERSTELLUNG EINES DREIDIMENSIONALEN BAUTEILS**
METHOD FOR PRODUCING A THREE-DIMENSIONAL COMPONENT
PROCÉDÉ DE FABRICATION D'UNE PIÈCE TRIDIMENSIONNELLE

(30) Priorität: 28.03.2013 DE 102013103249
(43) Veröffentlichungstag der Anmeldung: 03.02.2016
(73) Patentinhaber: FIT AG, 92331 Lupburg (DE)
(72) Erfinder: BONKE, Alexander, 92331 Parsberg (DE); OSTER, Alexander, 93047 Regensburg (DE)
(74) Vertreter: Schneider, Andreas
(86) Internationale Anmeldenummer: PCT/EP2014/000804
(87) Internationale Veröffentlichungsnummer: WO 2014/154353

(56) Entgegenhaltungen:
- WO-A2-2009/010034
- US-A1- 2005 206 500
- US-A1- 2008 067 245
- US-A1- 2009 173 443
- US-B1- 6 976 627

## Beschreibung

Die Erfindung betrifft ein Verfahren zur Herstellung eines dreidimensionalen Bauteils durch schichtweises Auftragen eines Aufbaumaterials. Darüber hinaus betrifft die Erfindung ein Verfahren zur Identifizierung eines mit einem solchen Verfahren hergestellten Bauteils und ein Verfahren zur weiteren Behandlung eines mit einem solchen Verfahren identifizierten Bauteils. Die Erfindung betrifft schließlich auch eine Schichtbaufertigungsanlage, ausgebildet zur Durchführung dieser Verfahren.

Schichtbauverfahren, die auch als additive Fertigungsverfahren bezeichnet werden, dienen zur Herstellung von schichtweise aufgebauten Bauteilen aus verfestigbarem Material, wie Harz, Kunststoff, Metall oder Keramik und werden beispielsweise zur Fertigung von technischen Prototypen verwendet. Verschiedene auf dem Prinzip des Schichtaufbaus beruhende additive Fertigungsverfahren und Anlagen zu deren Durchführung sind aus dem Stand der Technik bekannt, so beispielsweise Stereolithographie, selektives Laserschmelzen, selektives Maskensintern, Fused Deposition Moulding, Polyjet, 3D Printing usw.

Der Aufbauvorgang erfolgt dabei in einer häufig geschlossenen Prozeßkammer, die auch als Baukammer oder Bauraum bezeichnet wird. Anlagen, mit denen ein solches Schichtbauverfahren durchgeführt wird, werden auch als Rapid Prototyping-Systeme bezeichnet.

Während in der Vergangenheit mit Schichtbauverfahren hauptsächlich Prototypen und Einzelstücke sowie Kleinserien gefertigt wurden, wird heute immer mehr zu einer additiven Fertigung im industriellen Maßstab übergegangen. Bei einer solchen Massenfertigung werden oftmals keine identischen Bauteile, sondern zueinander ähnliche Bauteile gefertigt. Dabei kann es sich um kundenspezifisch individualisierte Bauteile, wie beispielsweise Austauschschalen für Mobiltelefon, handeln oder aber es handelt sich um aus anderen Gründen zueinander ähnliche Teile.

Um den vorhandenen Bauraum möglichst effizient auszulasten, werden dabei während eines Aufbauvorgangs gleichzeitig mehrere Bauteile in einem gemeinsamen Bauraum einer Fertigungsanlage hergestellt. Dies können auch Bauteile von unterschiedlichen Kunden sein.

Im Anschluß daran muß eine Sortierung der hergestellten Bauteile erfolgen, beispielsweise um die Bauteile in einem Folgeschritt richtig etikettieren und verpacken zu können. Die hierfür notwendige Identifizierung der Bauteile erfolgt in der Regel von Hand auf der Grundlage äußerer Designmerkmale, wie beispielsweise der Form- und/oder Farbgebung der Bauteile, häufig unter Zugrundelegung der Baupläne. Diese Art der Sortierung ist sehr aufwendig, langsam und fehleranfällig.

In WO2009/010034 A2 ist das Herstellen dreidimensionaler Bauteile mittels eines Druckverfahrens beschrieben. Dabei können an Hilfsstrukturen, die zum Zweck einer verbesserten Handhabung zum Verbinden von mehreren Bauteilen dienen, Bauteilnummern angebracht werden. In US 6, 976, 627 B1 ist bei einem Verfahren der additiven Fertigung unter Anwendung der Stereolithographie beschrieben, daß zur nachträglichen Identifizierung individuell hergestellter Bauteile ein spezieller 3D-Matrix-Barcode verwendet wird, der sich dadurch auszeichnet, daß er Höheninformationen enthält. US2005/0206500A1 betrifft ein im Inneren des Bauteils angeordnetes Identifikationselement, das von außen mittels elektromagnetischer Strahlung, Röntgenstrahlung oder dergleichen detektierbar ist. US2009/0173443A1 betrifft ebenfalls ein 3D-Bauverfahren mit einem im Bauteil eingebetteten Identifizierungselement, wobei es sich auch hier um ein mittels elektromagnetischer Wellen auslesbares Element handelt. US2008/0067245A1 beschreibt schließlich ein Behältnis zum Transportieren von Bauteilen innerhalb eines Produktionsprozesses, bei dieses Behältnis mit einem Schild zur Standorterfassung versehen ist; das Schild weist einen 2D-Barcode auf, der durch ein Lochmuster gebildet ist.

Eine Aufgabe der vorliegenden Erfindung ist es, eine einfache, schnelle und sichere Sortierung von mit einem Schichtbauverfahren hergestellten dreidimensionalen Bauteilen zu ermöglichen.

Diese Aufgabe wird durch ein Verfahren nach Anspruch 1 bzw. durch ein Verfahren nach Anspruch 8 bzw. durch ein Verfahren nach Anspruch 9 bzw. durch eine Schichtbaufertigungsanlage nach Anspruch 11 bzw. durch ein Computerprogramm nach Anspruch 12 gelöst. Vorteilhafte Ausführungen der Erfindung sind in den Unteransprüchen angegeben. Die im Folgenden im Zusammenhang mit den Verfahren erläuterten Vorteile und Ausgestaltungen gelten sinngemäß auch für die erfindungsgemäße Schichtbaufertigungsanlage bzw. das Computerprogramm und umgekehrt.

Eine Kernidee der Erfindung ist es, während des Aufbauvorgangs in dem Bauraum der Schichtbaufertigungsanlage nicht nur das Bauteil, sondern auch wenigstens ein dem Bauteil zugeordnetes Kennzeichnungselement herzustellen. Das Kennzeichnungselement hält dabei Informationen über das Bauteil bereit. Bei den bereitgehaltenen Informationen handelt es sich vorzugsweise um Informationen, die eine unmittelbare oder mittelbare Identifizierung des entsprechenden Bauteils ermöglichen. Durch die vorteilhafterweise eindeutige Zuordnung des Kennzeichnungselements zu dem Bauteil ist im Anschluß an die Herstellung mehrerer Bauteile eine einfache, schnelle und sichere Identifizierung und damit auch eine entsprechend vorteilhafte Sortierung der einzelnen Bauteile möglich.

Dies gilt um so mehr bei einer Batchfertigung, bei der während des einen Aufbauvorgangs nicht nur ein einziges Bauteil, sondern mehrere Bauteile, insbesondere mehrere einander ähnliche Bauteile, zusammen mit den entsprechenden Kennzeichnungselementen in einem gemeinsamen Bauraum hergestellt werden. Die Anzahl der in dem Bauraum angeordneten Bauteile kann dabei, je nach Größe der herzustellenden Bauteile und zur Verfügung stehendem Bauraum stark variieren.

In einem einfachen Fall ist dabei jedem Bauteil genau ein Kennzeichnungselement zugeordnet. Es können einem Bauteil aber auch mehrere Kennzeichnungselemente zugeordnet sein. Das ist insbesondere dann von Vorteil, wenn das Bauteil aus mehreren Komponenten besteht, die später, beispielsweise zum Zweck der Verpackung, voneinander getrennt werden. Es kann dann sichergestellt werden, daß jeder einzeln handhabbaren Bauteilkomponente ein Kennzeichnungselement zugeordnet ist.

Besonders vorteilhaft ist eine Ausführungsform der Erfindung, bei der das wenigstens eine Kennzeichnungselement derart hergestellt wird, daß es im wesentlichen in der Aufbauebene liegt. Mit anderen Worten erstreckt sich das Kennzeichnungselement vorzugsweise ausschließlich oder nahezu ausschließlich in der Schichtaufbauebene des Bauraums. Ein solcherart hergestelltes Kennzeichnungselement ist im wesentlichen flach. Es ist vorzugsweise nur eine Aufbauschicht oder zwei Aufbauschichten dick. Auch ist das Kennzeichnungselement vorzugsweise klein ausgeführt. Üblicherweise reicht eine Fläche von etwa einem Quadratzentimeter aus, um die benötigten Informationen auf dem Kennzeichnungselement unterzubringen.

Aufgrund dieser Eigenschaften benötigt das Kennzeichnungselement sehr wenig Bauraum und läßt sich bauraumoptimiert, d. h. den Bauraum optimal ausnutzend, anordnen. Darüber hinaus verursacht es nur geringe Materialkosten und nur ein sehr geringes zusätzliches Datenvolumen. Außerdem läßt sich ein solches Kennzeichnungselement besonders schnell herstellen. Wegen des sehr geringen Platzbedarfes und der sehr kurzen Bauzeit erhöhen sich die Herstellungskosten insgesamt nicht oder nur minimal.

Erfindungsgemäß wird das wenigstens eine Kennzeichnungselement derart hergestellt, daß es mit einer Anzahl von Öffnungen versehen ist, wobei mit Hilfe der Öffnungen die Informationen kodiert sind. Anders ausgedrückt werden die Informationen unter Verwendung eines speziellen Codes in dem Kennzeichnungselement gespeichert. Die Kodierung kann dabei beispielsweise auf der Größe, Form und/oder Anordnung der Öffnungen beruhen.

Besonders vorteilhaft ist es, wenn die Codierung der Bauteilinformationen, also insbesondere die Codierung der eine Identifizierung des Bauteils ermöglichenden Informationen, durch ein in dem Kennzeichnungselement angebrachtes Lochmuster erfolgt. Mit Hilfe eines solchen Öffnungs- oder Lochmusters lassen sich auf einem Kennzeichnungselement, das über eine nutzbare Fläche von beispielsweise einem Quadratzentimeter verfügt, Informationen kodieren, die zur eindeutigen Identifizierung von einer Million Bauteilen dienen, also beispielsweise eine Seriennummer aus einer Serie von Null bis eine Million, ohne daß darunter die sichere Lesbarkeit des Öffnungs- oder Lochmusters leidet. Im Gegensatz zu der Anbringung von Buchstaben oder Zahlen in, an oder auf dem Kennzeichnungselement ermöglicht die Verwendung eines Öffnungs- oder Lochmusters in einer besonders bevorzugten Ausführungsform der Erfindung eine binäre Kodierung und damit - bei Verwendung einer geeigneten Codekonvertierung - das Unterbringen einer vielfach größeren Informationsmenge pro zur Verfügung stehenden Fläche des Kennzeichnungselements. Dabei bewirkt beispielsweise das Auslesen eines binären Codes, daß eine Öffnung oder ein Loch als eine binäre "1" und das nicht Vorhandensein einer Öffnung oder eines Loches als eine binäre "0" angesehen wird. Das Öffnungs- bzw. Lochmuster entspricht dann beispielsweise einem Bitmuster. Die Verwendung eines solchen Öffnungs- oder Lochmusters stellt einen einfachen und fehlersicher maschinenlesbaren Code zur Verfügung. Das Öffnungs- oder Lochmuster ist hierfür vorzugsweise in einer definierten Art und Weise strukturiert in dem Kennzeichnungselement angebracht, insbesondere in Form einer Matrix mit einer Anzahl Spalten und/oder einer Anzahl Zeilen.

Es kann auch eine Kodierung der Informationen anhand der Form der Öffnungen oder Löcher erfolgen. Diese Art der Kodierung kann die alleinige Kodierung sein; vorzugsweise wird diese Art der Kodierung aber in Kombination mit einer der anderen beschriebenen Kodierungsmöglichkeiten angewendet. In diesem Fall werden verschiedene Öffnungs- bzw. Lochformen verwendet, beispielsweise kreisrunde Öffnungen bzw. Löcher in Form von Punkten oder langgestreckte Öffnungen bzw. Löcher in Form von Strichen.

Es kann auch eine Kodierung der Informationen anhand der Größe der Öffnungen oder Löcher erfolgen. Diese Art der Kodierung kann die alleinige Kodierung sein; vorzugsweise wird diese Art der Kodierung aber in Kombination mit einer der anderen beschriebenen Kodierungsmöglichkeiten angewendet. In diesem Fall werden verschiedene Öffnungs- bzw. Lochgrößen verwendet, d. h. beispielsweise kreisrunde Öffnungen bzw. Löcher mit unterschiedlichen Durchmessern.

Durch diese Form der Kodierung mit Hilfe eines Öffnungs- oder Lochmusters wird nicht nur das Unterbringen einer zur Identifikation des Kennzeichnungselements ausreichend großen Datenmenge auf kleinstem Raum ermöglicht. Es ist auch ein sehr sicheres, vorzugsweise automatisches Auslesen des Codes und damit ein sicheres Erkennen der Informationen gewährleistet. Das Auslesen erfolgt dabei vorzugsweise auf optischem Weg, d. h. mit Hilfe eines optischen Lesegerätes. Besonders vorteilhaft ist in diesem Zusammenhang die Verwendung einer Kamera mit Autofokus-Funktion als optisches Lesegerät. Grundsätzlich ist aber auch ein mechanisches oder elektrisches Auslesen möglich.

Es ist von besonderem Vorteil, wenn es sich bei den Öffnungen um Durchbrüche, also das Kennzeichnungselement vollständig durchdringende Öffnungen handelt. In diesem Fall kann der für ein optisches Auslesen notwendige Kontrast stets und unter allen Umständen garantiert werden, gegebenenfalls unter Zuhilfenahme eines Leuchttisches oder einer Kontrastfolie. Hierfür wird vorzugsweise ein Durchlichtverfahren angewendet. Aus dem dargestellten binären Code ergeben sich dann auf Empfängerseite die beiden Zustände "Licht" und "kein Licht".

Werden statt der Durchbrüche lediglich das Kennzeichnungselement nicht vollständig durchdringende Öffnungen in der Oberfläche des Kennzeichnungselements verwendet, kann bei geeigneter, beispielsweise unter einem bestimmten Winkel einfallenden Beleuchtung, beispielsweise durch einen sich durch eine solche Beleuchtung ergebenden Schattenwurf, ein für eine sichere Erkennung ausreichender Kontrast ebenfalls gegeben sein. Hierfür wird vorzugsweise ein Auflichtverfahren angewendet.

Erfolgt die Kodierung der Informationen allein durch die Anordnung der Öffnungen in dem Kennzeichnungselement, dann ist die für die Öffnungen verwendete Form frei wählbar. Die Form der Öffnungen ist jedoch vorteilhafterweise so gewählt, daß die notwendige Erkennbarkeit bzw. Lesbarkeit gegeben ist.

Die beschriebene Kodierung der Informationen mit Hilfe von Öffnungen bzw. Durchbrüchen gewährleistet eine sichere optische Erkennung der Informationen auch dann, wenn für die Herstellung des Bauteils bzw. des Kennzeichnungselements einfarbiges Aufbaumaterial verwendet wird. Bei einfarbigem Aufbaumaterial ist sonst eine sichere optische Erkennung von kodierten Informationen, beispielsweise in Form eines lediglich oberflächig auf das Kennzeichnungselement angebrachten Strichcodes, wegen des fehlenden Kontrasts mit üblichen Lesegeräten nicht möglich.

Die Verwendung von Öffnungen bzw. Durchbrüchen in Kombination mit geeigneten Erfassungsmitteln, insbesondere optischen Kameras mit Autofokus-Funktion, und gegebenenfalls mit geeigneten Datenverarbeitungsmitteln, ermöglicht zudem das sichere Auslesen bzw. Verarbeiten der Informationen auch dann, wenn das Kennzeichnungselement, beispielsweise aufgrund einer unbeabsichtigten fehlerhaften Handhabung, nach dem Abschluß des Aufbauvorgangs, verbogen ist.

In einer weiteren vorteilhaften Ausführungsform der Erfindung werden die von dem Kennzeichnungselement bereitgehaltenen Informationen in einem dem Aufbauvorgang vorausgehenden Schritt automatisch erzeugt und/oder das Kennzeichnungselement wird in einem dem Aufbauvorgang vorausgehenden Schritt vorzugsweise automatisch dem Bauteil zugeordnet. Anders ausgedrückt werden bereits vor dem Herstellen der Bauteile die Informationen, in nicht kodierter oder kodierter Form, erzeugt und einem bestimmten Bauteil bzw. einer Bauteilkomponente zugeordnet. Dies kann bei einer geringen Anzahl von gleichzeitig herzustellenden Bauteilen von Hand erfolgen. Vorzugsweise erfolgt das Erzeugen der Informationen und die Zuordnung vollautomatisch, beispielsweise mit Hilfe einer die entsprechende Funktionalität aufweisenden Software zur Erstellung des Aufbauplans.

Bei der vorliegenden Erfindung ist es von Vorteil, wenn das Kennzeichnungselement dem Bauteil konstruktiv zugeordnet ist. Anders ausgedrückt ist das Kennzeichnungselement mit dem Bauteil vorzugsweise auf mechanische Art und Weise verbunden. Dabei können verschiedene mechanische Verbindungen zum Einsatz kommen.

Das Kennzeichnungselement wird in einer vorteilhaften Ausführungsform der Erfindung derart hergestellt, daß es mit dem Bauteil unlösbar verbunden ist. In diesem Fall ist das Kennzeichnungselement vorzugsweise an oder auf dem Bauteil angebracht, also als integraler Bestandteil des Bauteils ausgeführt.

Das Kennzeichnungselement kann dann beispielsweise als Echtheitszertifikat verwendet werden, insbesondere dann, wenn die Informationen eine kodierte Seriennummer umfassen. Der Kunde kann in diesem Fall das Kennzeichnungselement zur Überprüfung der Echtheit seines Produkts oder zum Nachweis der Echtheit verwenden. Beispielsweise ist es möglich, daß der Kunde das Kennzeichnungselement fotografiert und das Foto zur Überprüfung der Echtheit oder zum Nachweis der Echtheit an den Hersteller schickt, woran sich weitere Geschäftsvorgange anschließen können, beispielsweise zusätzliche Dienstleistungen des Herstellers. Mit Hilfe einer geeigneten Softwareanwendung kann es dem Kunden aber auch ermöglicht werden, selbst die Echtheit des Produkts zu überprüfen.

In einer anderen vorteilhaften Ausführungsform der Erfindung wird das Kennzeichnungselement derart hergestellt, daß es mit Hilfe eines bauteileigenen Verbindungselements mit dem Bauteil verbunden ist. In einer einfachen Ausführung erfolgt dies mit Hilfe eines das Kennzeichnungselement direkt und unmittelbar mit dem Bauteil verbindenden Verbindungselements, wie einem später durchtrennbaren Materialsteg oder dergleichen. In diesem Fall ist eine im herkömmlichen Sinn unlösbare Verbindung derart ausgeführt, daß sie zerstörbar und damit lösbar ist. Es kann jedoch auch eine andere, im herkömmlichen Sinn lösbare Verbindung vorgesehen sein. Beispielsweise kann das Bauteil und das Kennzeichnungselement Verbindungselemente zur Ausbildung einer Rast- oder Schnappverbindung oder dergleichen aufweisen.

In einer weiteren vorteilhaften Ausführungsform der Erfindung wird das Kennzeichnungselement derart hergestellt, daß es mit dem Bauteil über ein bauteilfremdes Kopplungselement verbunden ist. Das Kopplungselement ist dabei vorzugsweise als separates Konstruktionselement ausgeführt. Mit anderen Worten ist das Kopplungselement weder Teil des Bauteils, noch Teil des Kennzeichnungselements. Als besonders vorteilhaft hat sich dabei ein Kopplungselement erwiesen, das nach Art einer Schlaufe ausgeführt ist und durch einen ersten, in dem Bauteil vorgesehenen Durchbruch sowie durch einen zweiten, in dem Kennzeichnungselement vorgesehenen Durchbruch hindurchgeführt ist. Gegenüber einem Kennzeichnungselement, welches direkt und unmittelbar über ein Verbindungselement mit dem Bauteil verbunden ist, ist die Verwendung eines Kopplungselements mit dem Vorteil verbunden, daß das Bauteil durch das Abtrennen des als Steg oder dergleichen ausgeführten Verbindungselements nicht beschädigt wird. Bei der Verwendung eines Kopplungselements, das zur Freigabe des Kennzeichnungselements durchtrennt bzw. zerstört werden kann, besteht nicht die Gefahr, daß die Zuordnung des Kennzeichnungselements zu dem Bauteil unerwünschte Spuren an dem Bauteil hinterläßt.

Um den zur Verfügung stehenden Bauraum bestmöglich auszunutzen und einen hohen Beladungsgrad zu erzielen, erfolgt üblicherweise eine entsprechende Optimierung bei der Anordnung der herzustellenden Bauteile. In einer weiteren vorteilhaften Ausführungsform der Erfindung wird nicht nur die Position des Bauteils, sondern auch die Position des jeweiligen Kennzeichnungselements in dem Aufbauraum relativ zu dem Bauteil in einem dem Aufbauvorgang vorausgehenden Schritt automatisch ermittelt. Vorzugsweise erfolgt das Ermitteln der optimalen, den Bauraum am besten ausnutzenden Position des Kennzeichnungselements vollautomatisch mit Hilfe einer die entsprechende Funktionalität aufweisenden Software zur Erstellung des Aufbauplans. Dabei können bereits zu einem frühen Zeitpunkt, zu dem die Anzahl und Form der herzustellenden Bauteile noch nicht abschließend feststeht, geeignete Stellen, an denen das Kennzeichnungselement plaziert werden könnte, manuell, halb- oder vollautomatisch identifiziert und/oder ausgewählt werden. Vorzugsweise erfolgt eine vollautomatische Identifizierung und Auswahl der geeigneten Position, sobald feststeht, welche Bauteile gefertigt werden und welche Freiräume zur Verfügung stehen.

Dieser Bauplatzoptimierung kommt zugute, daß das erfindungsgemäße Kennzeichnungselement vorzugsweise im wesentlichen flach ist, also beispielsweise nur eine oder zwei Aufbauschichten umfaßt und daher eine sehr flexible Positionierung des Kennzeichnungselements relativ zu dem dazugehörigen Bauteil möglich ist. Eine Anordnung des Kennzeichnungselements in schmalen Spalten, Lücken oder Öffnungen ist daher problemlos möglich, so daß eine sehr gute Bauraumauslastung erzielbar ist. Im einfachsten Fall kann das Kennzeichnungselement mit einem sehr geringen Abstand über dem jeweiligen Bauteil angeordnet werden, ohne daß sich dadurch die Gesamtbauhöhe wesentlich vergrößert.

Im Zusammenhang mit der oben beschriebenen Herstellung des dreidimensionalen Bauteils ergeben sich weitere Handlungsmöglichkeiten, deren Durchführbarkeit auf dem erfindungsgemäßen Grundgedanken beruhen.

Erfindungsgemäß wird daher ein Verfahren zur Identifizierung eines derart hergestellten Bauteils vorgeschlagen, welches Verfahren dadurch gekennzeichnet ist, daß eine vorzugsweise automatische optische Erkennung derjenigen Informationen erfolgt, die von dem wenigstens einen dem Bauteil zugeordneten Kennzeichnungselement bereitgehalten werden, und daß eine vorzugsweise automatische Identifizierung des Bauteils anhand dieser Informationen erfolgt. Zu diesem Zweck wird ein von dem ihm zugeordneten Bauteil getrenntes Kennzeichnungselement oder aber das Bauteil mit dem damit verbundenen Kennzeichnungselement einer optischen Leseeinheit zugeführt bzw. die optische Leseeinheit wird zu dem Kennzeichnungselement bewegt. Im Anschluß an den eigentlichen Lese- bzw. Erkennungsvorgang erfolgt mit Hilfe einer Datenverarbeitungseinheit, welche im einfachsten Fall eine entsprechend vorgehaltene Datenbank abfragt, eine Identifizierung des zum Kennzeichnungselement zugeordneten Bauteils. Fehler beim Auslesen der Informationen und bei der Zuordnung der Informationen zu einem Bauteil können damit weitgehend vermeiden werden. Durch die Anwendung der Erfindung lassen sich daher im Bereich der additiven Fertigung die Identifizierungskosten insbesondere bei ähnlichen Bauteilen deutlich senken.

Darüber hinaus wird ein Verfahren zur weiteren Behandlung eines derart identifizierten Bauteils vorgeschlagen, das dadurch gekennzeichnet ist, daß die weitere Behandlung in Abhängigkeit von dem Ergebnis der Identifizierung und/oder unter Verwendung des Ergebnisses der Identifizierung erfolgt. So erfolgt als ein weiterer Behandlungsschritt in Abhängigkeit von dem Ergebnis der Identifizierung ein der Identifizierung nachfolgender Verpackungsprozeß.

Besonders vorteilhaft ist es in diesem Zusammenhang, wenn das Bauteil ein Prüfkörper ist und die weitere Behandlung eine Überprüfung der Herstellungsqualität des Bauteils umfaßt. In diesem Fall wird das Ergebnis der Identifizierung verwendet, um Kenntnis von der Position des Prüfkörpers in dem Bauraum zu erlangen. Als ein nachfolgender Behandlungsschritt erfolgt unter Verwendung des Ergebnisses der Identifizierung, nämlich unter Verwendung der Kenntnis der Position des Prüfkörpers, eine Qualitätsprüfung.

Unter dem zuletzt beschriebenen Gesichtspunkt kann ein Teilaspekt der vorliegenden Erfindung auch als ein Verfahren zur Herstellung eines besonders einfach, vorzugsweise automatisch identifizierbaren Prüfkörpers betrachtet werden, das sich dadurch auszeichnet, daß die Position des Prüfkörpers während des Aufbauvorgangs durch ein anschließendes Auslesen der Informationen des Kennzeichnungselements vorzugsweise automatisch ermittelbar ist. Es kann daher im Anschluß an die Fertigung automatisiert eine Zuordnung der Lage des Prüfkörpers, also des zu prüfenden Bauortes, zu dem Prüfergebnis erfolgen, also beispielsweise zu der Leistung des zum Aufschmelzen des Aufbaumaterials verwendeten Lasers. Besonders vorteilhaft ist dabei die große Geschwindigkeit, mit welcher der Prüfkörper identifiziert und die Lage des Prüfkörpers im Bauraum festgestellt werden kann. Hierdurch verringert sich die Prüfdauer gegenüber allen bisher bekannten Vorgehensweisen erheblich und der gesamte Bauraum kann ohne wesentliche zeitliche Verzögerung hochauflösend geprüft werden, d. h. unter Verwendung einer Vielzahl von über den gesamten Bauraum verteilt angeordneten Prüfkörpern.

Bei dem Prüfkörper kann es sich um eines der Bauteile handeln, die entsprechend dem Aufbauplan ohnehin hergestellt werden sollten. In diesem Fall wird das Bauteil nach erfolgter Prüfung wie üblich weiterbehandelt. Bei dem Prüfkörper kann es sich aber auch um einen dedizierten Prüfkörper handeln, der zusätzlich zu den anderen Bauteilen, ausschließlich zu Prüfzwecken gefertigt wird. In diesem Fall kann der Prüfkörper hinsichtlich Form und Größe die gleichen Konstruktionsmerkmale aufweisen, wie das dem Prüfkörper zugeordnete Kennzeichnungselement, so daß sich für die Herstellung des Prüfkörpers die Bauzeit nicht oder nicht wesentlich verlängert und eine bauplatzoptimierte Anordnung des Prüfkörpers in dem Bauraum erfolgen kann. Im einfachsten Fall kann ein einzeln, d. h. ohne Bezug auf ein anderes Bauteil angefertigte Kennzeichnungselement selbst als Prüfkörper verwendet werden, da es die Informationen, die zur Kenntnis seiner Position im Bauraum benötigt werden, selbst mit sich führt.

Die erfindungsgemäße Schichtbaufertigungsanlage ist ausgebildet zur Durchführung eines Verfahrens nach Anspruch 1-10 mit einer Datenverarbeitungseinheit. Das erfindungsgemäße Computerprogramm weist Computerprogrammanweisungen auf zur Durchführung eines Verfahrens nach Anspruch 1-10. Das Computerprogramm umfaßt insbesondere Computerprogrammanweisungen zum automatischen Erzeugen der von dem Kennzeichnungselement bereitgehaltenen Informationen in einem dem Aufbauvorgang vorausgehenden Schritt und/oder Computerprogrammanweisungen zum automatischen Zuordnen des Kennzeichnungselements zu dem Bauteil in einem dem Aufbauvorgang vorausgehenden Schritt und/oder Computerprogrammanweisungen zum automatischen Ermitteln der Position des Kennzeichnungselements in dem Aufbauraum relativ zu dem Bauteil in einem dem Aufbauvorgang vorausgehenden Schritt und/oder Computerprogrammanweisungen zur Steuerung einer Schichtbaufertigungsanlage zur Durchführung der o. g. Verfahrensschritte, wenn das Computerprogramm auf einem Rechner ausgeführt wird.

Die erfindungsgemäße Schichtbaufertigungsanlage umfaßt zu diesem Zweck eine Datenverarbeitungseinheit, ausgebildet zur Durchführung aller Schritte entsprechend der hier beschriebenen Verfahren, die in einem Zusammenhang mit der Verarbeitung von Daten stehen. Die Datenverarbeitungseinheit weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß der beschriebenen Verfahren. Bei den Funktionsmodulen kann es sich um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Ausführungsbeispiele der Erfindung werden nachfolgend anhand der Zeichnungen näher erläutert. Hierbei zeigen:
- Fig. 1: eine schematische Darstellung eines Bauraums einer Schichtbaufertigungsanlage mit mehreren, gleichzeitig herzustellenden Bauteilen,
- Fig. 2: ein erfindungsgemäßes Kennzeichnungselement in Draufsicht,
- Fig. 3: ein Bauteil mit Kennzeichnungselement,
- Fig. 4: eine Blockdarstellung der Fertigungsanlage mit Auslese- und Identifizierungseinheit.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Beispielhaft wird ein Verfahren beschrieben, bei dem mit Hilfe einer additiven Fertigungsmethode dreidimensionale Bauteile direkt aus den entsprechenden Konstruktionsdaten hergestellt werden. Der Aufbau der Bauteile erfolgt dabei schichtweise, indem Schichten eines Aufbaumaterials in z-Richtung sukzessive übereinander aufgetragen werden. Vor dem Auftragen der jeweils nächsten Schichten werden die dem zu fertigenden Bauteil entsprechenden Stellen in den jeweiligen Schichten selektiv verfestigt. Das Verfestigen erfolgt durch lokales Erhitzen des pulverförmigen Aufbaumaterials mit Hilfe einer Strahlungsquelle. Indem gezielt Strahlung in geeigneter Weise in die gewünschten Bereiche eingebracht wird, kann dabei eine exakt definierte, beliebig geartete Bauteilstruktur erzeugt werden. Das dreidimensionale Bauteil wird hergestellt, indem mehrere dünne, individuell gestaltete Schichten aufeinanderfolgend erzeugt werden. Dem Fachmann ist dieses Verfahren grundsätzlich bekannt, wie er auch Kenntnis von anderen Schichtbauverfahren hat, bei welchen die Erfindung angewendet werden kann.

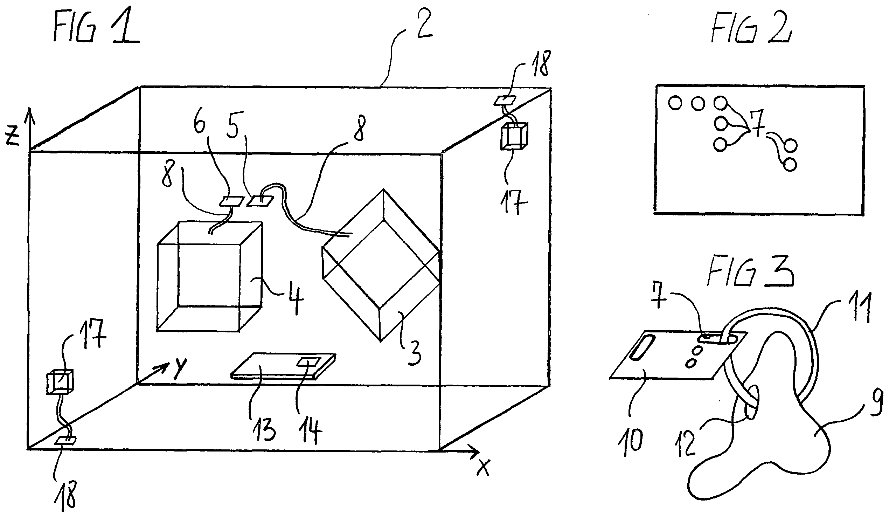

Während des Aufbauvorgangs werden in einem gemeinsamen Bauraum 2 einer Schichtbaufertigungsanlage 1 nicht nur eine Anzahl einander ähnlicher Bauteile 3, 4, sondern auch den Bauteilen 3, 4 zugeordnete Kennzeichnungselemente 5, 6 hergestellt, vgl. Fig. 1. Die Kennzeichnungselemente 5, 6 halten dabei Informationen über das jeweilige Bauteil 3, 4 bereit, die eine Identifizierung der einzelnen Bauteile 3, 4 ermöglichen. Im vorliegenden Fall handelt es sich dabei um die Seriennummern der Bauteile 3, 4.

Die Kennzeichnungselemente 5, 6 sind nur eine oder zwei Aufbauschichten dick, daher im wesentlichen flach und liegen dabei im wesentlichen in der Aufbauebene (x-y-Ebene), so daß die Bauzeit sehr kurz ist. Zur Identifizierung sind keine Buchstaben oder Zahlen auf dem Kennzeichnungselement angebracht. Statt dessen ist jedes Kennzeichnungselement 5, 6 mit einer Anzahl von Durchbrüchen 7 versehen, die ein Lochmuster ergeben, mit dessen Hilfe die Informationen codiert sind, vgl. Fig. 2. Dabei wird vorzugsweise eine binäre Codierung verwirklicht. Bei den Durchbrüchen 7 handelt es sich um einfache kreisrunde Löcher mit identischen Durchmessern. Die Bauteilinformationen zur Identifizierung der Bauteile 3, 4 sind somit in den Kennzeichnungselementen 5, 6 durch die Art und Weise der Anordnung der Durchbrüche 7 codiert.

Bei den in Fig. 1 abgebildeten, hier der Einfachheit halber würfelförmigen Bauteilen 3, 4 sind die Kennzeichnungselemente 5, 6 mit Hilfe eines bauteileigenen Verbindungselements in Gestalt eines später durchtrennbaren Materialsteges 8 mit den jeweiligen Bauteilen 3, 4 verbunden.

Bei dem in Fig. 3 einzeln dargestellten Bauteil 9 ist das Kennzeichnungselement 10 derart hergestellt, daß es mit dem Bauteil 9 über ein bauteilfremdes Kopplungselement 11 verbunden ist. Das Kopplungselement 11 nach Art einer Schlaufe ist dabei durch einen Durchbruch 12 im Bauteil 9 und einen Durchbruch 7 im Kennzeichnungselement 10 hindurchgeführt und kann nach der Fertigung ohne Beschädigung des Bauteils 9 durchtrennt werden.

Bei einem weiteren, in Fig. 1 abgebildeten Bauteil 13, hier beispielhaft eine flache Mobiltelefonschale, ist das Kennzeichnungselement 14 in das Bauteil 13 integriert.

Im Anschluß an die Fertigung werden nacheinander die Kennzeichnungselemente 5, 6, 10, 14 entweder einzeln, d. h. von den jeweiligen Bauteilen 3, 4, 9 getrennt, oder aber zusammen mit den Bauteilen 13 mit Hilfe eines optischen Lesegerätes in Form einer (Video-)Kamera 15 mit Autofokus-Funktion ausgelesen. Zu diesem Zweck werden die Kennzeichnungselemente 5, 6, 10, 14 relativ zu einer geeigneten Beleuchtungsanordnung, hier auf einem Leuchttisch 16, plaziert. Die in dem Leuchttisch 16 angeordneten Lichtquellen durchscheinen dabei das Lochmuster, so daß unter allen Umständen der für eine ordnungsgemäße Erfassung des Lochmusters notwendige Kontrast, in der Regel ein Hell/Dunkel-Kontrast, gegeben ist. Dabei wird das Lochmuster von der Kamera 15 erfaßt und die Bildinformation wird in geeigneter Weise gespeichert und/oder weitergeleitet.

Nach dem Auslesen des Lochmusters erfolgt die Identifizierung der Bauteile 3, 4, 8, 13 anhand der ausgelesenen Informationen durch geeignete Datenverarbeitungsmittel durch ein Konvertieren des Codes. Anstelle einer Bilderkennung, wie sie beispielsweise erforderlich wäre, wenn zur Identifizierung der Bauteile Buchstaben oder Zahlen verwendet werden würden, ist lediglich die Erfassung des Lochmusters, also die Erfassung einer definierten Anordnung von "Licht"/"kein Licht"-Strukturen, notwendig.

Zugleich mit den Bauteilen 3, 4, 13 und den Kennzeichnungselementen 5, 6, 14 werden in dem gemeinsamen Bauraum 2 eine Anzahl von Prüfkörper 17 hergestellt, die ebenfalls mit Kennzeichnungselementen 18 verbunden sind. Die Informationen dieser Kennzeichnungselemente 18 werden ebenso ausgelesen und die Prüfkörper 17 identifiziert. Anschließend wird die Lage der Prüfkörper 17 mit Hilfe geeigneter Datenverarbeitungsmittel automatisch dem Prüfergebnis zugeordnet.

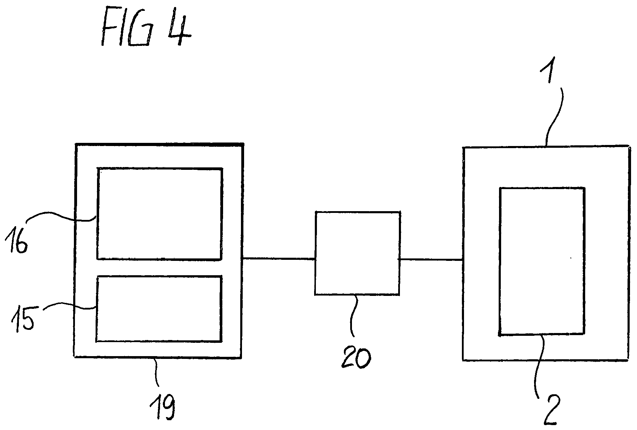

Mit der Auslese- und Identifizierungseinheit 19 sowie mit der Schichtbaufertigungsanlage 1 verbunden ist eine Datenverarbeitungseinheit 20, die zur Ausführung der entsprechenden Verfahrensschritte ausgebildet ist, vgl. Fig. 4.

### Bezugszeichenliste

- 1: Schichtbaufertigungsanlage
- 2: Bauraum
- 3: ähnliches Bauteil
- 4: ähnliches Bauteil
- 5: Kennzeichnungselement
- 6: Kennzeichnungselement
- 7: Durchbruch
- 8: Materialsteg
- 9: Bauteil
- 10: Kennzeichnungselement
- 11: Kopplungselement
- 12: Durchbruch
- 13: Bauteil
- 14: Kennzeichnungselement
- 15: Kamera
- 16: Leuchttisch
- 17: Prüfkörper
- 18: Kennzeichnungselement
- 19: Auslese- und Identifizierungseinheit
- 20: Datenverarbeitungseinheit

## Patentansprüche

1. Verfahren zur Herstellung eines dreidimensionalen Bauteils (3, 4, 9, 13, 17) durch schichtweises Auftragen eines Aufbaumaterials, wobei während eines Aufbauvorgangs sowohl das Bauteil (3, 4, 9, 13, 17), als auch wenigstens ein dem Bauteil (3, 4, 9, 13, 17) zugeordnetes Kennzeichnungselement (5, 6, 10, 15, 18), welches Kennzeichnungselement (5, 6, 10, 15, 18) Informationen über das Bauteil (3, 4, 9, 13, 17) bereithält, in einem gemeinsamen Bauraum einer Schichtbaufertigungsanlage hergestellt werden, wobei das wenigstens eine Kennzeichnungselement (5, 6, 10, 15, 18) derart hergestellt wird, daß es mit einer Anzahl von Öffnungen (7) zur Kodierung der Informationen versehen ist.

2. Verfahren nach Anspruch 1, **dadurch gekennzeichnet, daß** während des Aufbauvorgangs mehrere Bauteile (3, 4, 9, 13, 17), insbesondere mehrere einander ähnliche Bauteile (3, 4, 9, 13, 17), sowie diesen Bauteilen (3, 4, 9, 13, 17) zugeordnete Kennzeichnungselemente (5, 6, 10, 15, 18) hergestellt werden.

3. Verfahren nach Anspruch 1 oder 2, **dadurch gekennzeichnet, daß** das wenigstens eine Kennzeichnungselement (5, 6, 10, 15, 18) derart hergestellt wird, daß es im wesentlichen in der Aufbauebene liegt.

4. Verfahren nach einem der Ansprüche 1 bis 3, **dadurch gekennzeichnet, daß** die von dem Kennzeichnungselement (5, 6, 10, 15, 18) bereitgehaltenen Informationen in einem dem Aufbauvorgang vorausgehenden Schritt automatisch erzeugt werden und/oder daß das Kennzeichnungselement (5, 6, 10, 15, 18) in einem dem Aufbauvorgang vorausgehenden Schritt vorzugsweise automatisch dem Bauteil (3, 4, 9, 13, 17) zugeordnet wird.

5. Verfahren nach einem der Ansprüche 1 bis 4, **dadurch gekennzeichnet, daß** das Kennzeichnungselement (5, 6, 10, 15, 18) derart hergestellt wird, daß es
- mit dem Bauteil (13) unlösbar verbunden, insbesondere an oder auf dem Bauteil (13) angebracht ist, oder
- mit dem Bauteil (3, 4, 17) mit Hilfe eines bauteileigenen Verbindungselements (8) verbunden ist, oder
- dem Bauteil (9) über ein bauteilfremdes Kopplungselement (11) lösbar verbunden ist.

6. Verfahren nach einem der Ansprüche 1 bis 5, **dadurch gekennzeichnet, daß** die Position des Kennzeichnungselements (5, 6, 10, 15, 18) in dem Aufbauraum (2) relativ zu dem Bauteil (3, 4, 9, 13, 17) in einem dem Aufbauvorgang vorausgehenden Schritt vorzugsweise automatisch ermittelt wird.

7. Verfahren nach einem der Ansprüche 1 bis 6, **dadurch gekennzeichnet, daß** die Öffnungen (7) das Kennzeichnungselement vollständige durchdringende Durchbrüche sind, die ein mit Hilfe eines Durchlichtverfahrens auslesbares Lochmuster ergeben.

8. Verfahren zur Identifizierung eines mit einem Verfahren nach einem der Ansprüche 1 bis 7 hergestellten Bauteils (3, 4, 9, 13, 17), **gekennzeichnet durch**
- eine vorzugsweise automatische optische Erkennung der Informationen, die von dem wenigstens einen dem Bauteil (3, 4, 9, 13, 17) zugeordneten Kennzeichnungselement (5, 6, 10, 15, 18) bereitgehalten werden, und
- eine vorzugsweise automatische Identifizierung des Bauteils (3, 4, 9, 13, 17) anhand dieser Informationen.

9. Verfahren zur weiteren Behandlung eines mit einem Verfahren nach Anspruch 8 identifizierten Bauteils (3, 4, 9, 13, 17), **dadurch gekennzeichnet, daß** die weitere Behandlung in Abhängigkeit von dem Ergebnis der Identifizierung und/oder unter Verwendung des Ergebnisses der Identifizierung erfolgt.

10. Verfahren nach Anspruch 9, **dadurch gekennzeichnet, daß** das Bauteil (3, 4, 9, 13, 17) ein Prüfkörper ist und die weitere Behandlung eine Überprüfung der Herstellungsqualität des Bauteils (3, 4, 9, 13, 17) umfaßt.

11. Schichtbaufertigungsanlage, ausgebildet zur Durchführung eines Verfahrens nach einem der Ansprüche 1 bis 10, mit einer Datenverarbeitungseinheit zur Durchführung der Verfahren nach einem der Ansprüche 1 bis 10.

12. Computerprogramm zur Durchführung der Verfahren nach einem der Ansprüche 1 bis 10 und/oder zur Steuerung einer Schichtbaufertigungsanlage (1) nach Anspruch 11.

## Claims

1. A method for manufacturing a three-dimensional component (3, 4, 9, 13, 17) by application of a build material in layers, wherein during a build operation both the component (3, 4, 9, 13, 17) and at least one characterizing element (5, 6, 10, 15, 18) associated with the component (3, 4, 9, 13, 17), which characterizing element (5, 6, 10, 15, 18) holds information about the component (3, 4, 9, 13, 17), are manufactured in a shared build space of a layer manufacturing system, wherein the at least one characterizing element (5, 6, 10, 15, 18) is manufactured in such a way that it is equipped with a number of openings (7) for coding the information.

2. The method according to Claim 1, **characterized in that** multiple components (3, 4, 9, 13, 17), in particular multiple components (3, 4, 9, 13, 17) similar to one another, as well as characterizing elements (5, 6, 10, 15, 18) associated with those components (3, 4, 9, 13, 17), are manufactured during the build operation.

3. The method according to Claim 1 or 2, **characterized in that** the at least one characterizing element (5, 6, 10, 15, 18) is manufactured in such a way that it lies substantially in the build plane.

4. The method according to one of Claims 1 to 3, **characterized in that** the information held by the characterizing element (5, 6, 10, 15, 18) is automatically generated in a step preceding the build operation, and/or the characterizing element (5, 6, 10, 15, 18) is, preferably automatically, associated with the component (3, 4, 9, 13, 17) in a step preceding the build operation.

5. The method according to one of Claims 1 to 4, **characterized in that** the characterizing element (5, 6, 10, 15, 18) is manufactured in such a way that it is
- non detachably connected to the component (13), in particular applied on or onto the component (13), or
- connected to the component (3, 4, 17) with the aid of a connecting element (8) inherent in the component, or
- connected to the component (9) via a coupling element (11) external to the component.

6. The method according to one of Claims 1 to 5, **characterized in that** the position of the characterizing element (5, 6, 10, 15, 18) in the build space (2) relative to the component (3, 4, 9, 13,17) is determined, preferably automatically, in a step preceding the build operation.

7. The method according to one of Claims 1 to 6, **characterized in that** the openings (7) are apertures penetrating completely through the characterizing element (5, 6, 10, 15, 18), which apertures result in a hole pattern readable by means of a transmitted-light method.

8. A method for identifying a component (3, 4, 9, 13, 17) manufactured with a method according to one of Claims 1 to 7, **characterized by**
- a preferably automatic optical recognition of that information which is held by the at least one characterizing element (5, 6, 10, 15, 18) associated with the component (3, 4, 9, 13, 17); and
- a preferably automatic identification of the component (3, 4, 9, 13, 17) on the basis of that information.

9. A method for further processing of a component (3, 4, 9, 13, 17) identified with the method according to Claim 8, **characterized in that** the further processing is accomplished as a function of the result of the identification and/or utilizing the result of the identification.

10. The method according to Claim 9, **characterized in that** the component (3, 4, 9, 13, 17) is a test article, and the further processing encompasses a check of the manufacturing quality of the component (3, 4, 9, 13, 17).

11. A layer manufacturing system embodied to carry a method according to one of Claims 1 to 10, having a data processing unit for carrying out the methods according to claims 1 to 10.

12. A computer program for carrying out the method according to one of Claims 1 to 10 and/or for controlling a layer manufacturing system (1) according to Claim 11.

## Revendications

1. Procédé de fabrication d'un composant tridimensionnel (3, 4, 9, 13, 17) par application en couches d'un matériau constitutif,
dans lequel, au cours d'un processus d'assemblage, le composant (3, 4, 9, 13, 17) ainsi qu'au moins un élément d'identification (5, 6, 10, 15, 18) associé au composant (3, 4, 9, 13, 17), qui fournit des informations sur le composant (3, 4, 9, 10, 15, 18), sont fabriqués dans un espace de montage commun d'une installation de fabrication en couches,
dans lequel l'au moins un élément d'identification (5, 6, 10, 15, 18) est fabriqué de manière à être pourvu d'un certain nombre d'ouvertures (7) pour coder les informations.

2. Procédé selon la revendication 1, **caractérisé en ce que** plusieurs composants (3, 4, 9, 13, 17), en particulier plusieurs composants similaires (3, 4, 9, 13, 17), ainsi que des éléments d'identification (5, 6, 10, 15, 18) associés auxdits composants (3, 4, 9, 13, 17) sont fabriqués pendant le processus d'assemblage.

3. Procédé selon la revendication 1 ou 2, **caractérisé en ce que** l'au moins un élément d'identification (5, 6, 10, 15, 18) est fabriqué de manière à ce qu'il se situe sensiblement dans le plan de montage.

4. Procédé selon l'une des revendications 1 à 3, **caractérisé en ce que** les informations contenues dans l'élément d'identification (5, 6, 10, 15, 18) sont générées automatiquement lors d'une étape précédant le processus d'assemblage et/ou **en ce que** l'élément d'identification (5, 6, 10, 15, 18) est de préférence associé automatiquement au composant (3, 4, 9, 13, 17) lors d'une étape précédant le processus d'assemblage.

5. Procédé selon l'une des revendications 1 à 4, **caractérisé en ce que** l'élément d'identification (5, 6, 10, 15, 18) est fabriqué de manière à ce qu'il soit
- relié de manière inamovible au composant (13), en particulier attaché au ou sur le composant (13), ou
- relié au composant (3, 4, 17) à l'aide d'un élément de liaison (8) faisant partie du composant, ou
- relié de manière amovible au composant (9) par l'intermédiaire d'un élément d'accouplement (11) ne faisant pas partie du composant.

6. Procédé selon l'une des revendications 1 à 5, **caractérisé en ce que** la position de l'élément d'identification (5, 6, 10, 15, 18) dans l'espace de montage (2) par rapport au composant (3, 4, 9, 13, 17) est de préférence déterminée automatiquement lors d'une étape précédant le processus de montage.

7. Procédé selon l'une des revendications 1 à 6, **caractérisé en ce que** les ouvertures (7) sont des passages traversant entièrement l'élément d'identification qui produisent un motif de trous pouvant être lu à l'aide d'un procédé de lumière transmise.

8. Procédé d'identification d'un composant (3, 4, 9, 13, 17) produit par un procédé selon les revendications 1 à 7, **caractérisé par**
- une reconnaissance optique de préférence automatique des informations contenues dans l'au moins un élément d'identification (5, 6, 10, 15, 18) associé au composant (3, 4, 9, 13, 17), et
- une identification de préférence automatique du composant (3, 4, 9, 13, 17) sur la base desdites informations.

9. Procédé de post-traitement d'un composant (3, 4, 9, 13, 17) identifié par un procédé selon la revendication 8, **caractérisé en ce que** le post-traitement est effectué en fonction du résultat de l'identification et/ou par utilisation du résultat de l'identification.

10. Procédé selon la revendication 9, **caractérisé en ce que** le composant (3, 4, 9, 13, 17) est un échantillon et **en ce que** le post-traitement comprend un contrôle de la qualité de fabrication du composant (3, 4, 9, 13, 17).

11. Installation de fabrication en couches, conçue pour mettre en oeuvre un procédé selon l'une des revendications 1 à 10, comportant une unité de traitement des données pour la mise en oeuvre des procédés selon l'une des revendications 1 à 10.

12. Programme informatique pour la mise en oeuvre des procédés selon l'une des revendications 1 à 10 et/ou pour la commande d'une installation de fabrication en couches (1) selon la revendication 11.
